Europäisches Patentamt

European Patent Office

Office européen des brevets

(19)

(11) **EP 1 162 760 A1**

(12) **EUROPEAN PATENT APPLICATION**
published in accordance with Art. 158(3) EPC

(43) Date of publication:
**12.12.2001 Bulletin 2001/50**

(21) Application number: **00981673.7**

(22) Date of filing: **13.12.2000**

(51) Int Cl.⁷: **H04B 7/005**

(86) International application number:
**PCT/JP00/08801**

(87) International publication number:
**WO 01/47143 (28.06.2001 Gazette 2001/26)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **22.12.1999 JP 36375699**

(71) Applicant: **MATSUSHITA ELECTRIC INDUSTRIAL CO., LTD.**
**Kadoma-shi, Osaka 571-8501 (JP)**

(72) Inventor: **KITAGAWA, Keiichi**
**Yokosuka-shi, Kanagawa 239-0847 (JP)**

(74) Representative: **Grünecker, Kinkeldey, Stockmair & Schwanhäusser Anwaltssozietät**
**Maximilianstrasse 58**
**80538 München (DE)**

(54) **IMPULSE RESPONSE INFERRER AND PROPAGATION PATH INFERRING METHOD**

(57)    A Lattice filter 201 generates a backward prediction error and a backward reflection coefficient by the use of an input signal sequence. A tap coefficient calculation section 202 calculates a tap coefficient by the use of a reference signal and a backward prediction error signal sequence generated by the Lattice filter. A tap coefficient conversion section 203 makes a transformation matrix by the use of a backward reflection coefficient generated by the Lattice filter 201, and generates a tap coefficient applicable to a transversal type filter by mean of a matrix operation using the tap coefficient calculated by the tap coefficient calculation section 202 and the aforesaid transformation matrix.

FIG.3

## Description

Technical Field

The present invention relates to an equalizer for compensating waveform distortions owing to delays generated in propagation paths for digital signal transmission, and more particularly to an impulse response estimation device to be provided to an equalizer for obtaining impulse responses in the propagation paths.

Background Art

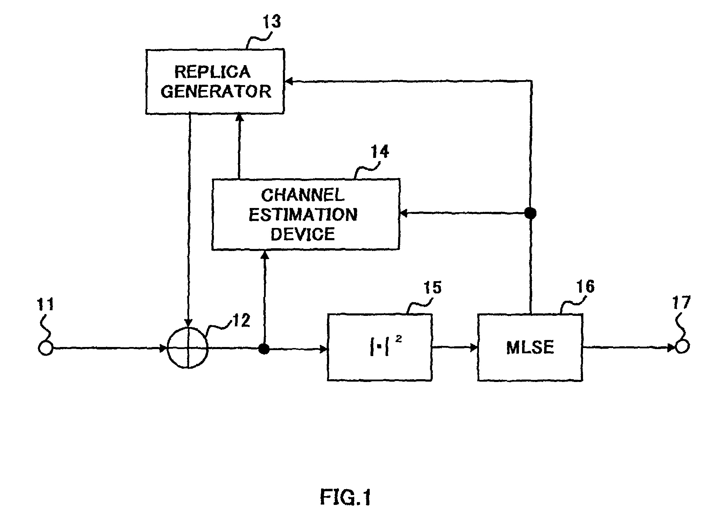

In digital signal transmission, there is a case where transmission characteristics remarkably deteriorate owing to the generation of intersymbol interference in demodulated signals by being influenced by delay waves generated in propagation paths. For compensating the influences of the intersymbol interference in demodulated signals, an adaptive equalizer is used. As an example of the adaptive equalizer, a maximum likelihood sequence estimation type equalizer that is a transversal type filter is described with reference to FIG. 1.

FIG. 1 is a block diagram showing the configuration of a conventional maximum likelihood sequence estimation type equalizer. In FIG. 1, a received signal inputted from an input terminal 11 is transmitted to a subtracter 12. The subtracter 12 calculates an error between a replica (an estimation value of the received signal) transmitted from a replica generator 13, which will be described later, and the received signal from the input terminal 11 to output an error signal. A square circuit 15 obtains the electric power of the error signal outputted by the subtracter 12.

A maximum likelihood sequence estimation device (MLSE) 16 estimates a transmission sequence having the highest likelihood on the basis of the signal power obtained by the square circuit 15, and the maximum likelihood sequence estimation device 16 outputs the estimated transmission sequence from an output terminal 17 as an estimated signal. Furthermore, the maximum likelihood sequence estimation device 16 outputs the estimated transmission sequence to a channel estimation device 14 and the replica generator 13.

The channel estimation device 14 obtains the impulse response (tap coefficient) of a propagation path on the basis of the error signal outputted by the subtracter 12 and the transmission sequence outputted by the maximum likelihood sequence estimation device 16. The replica generator 13 calculates the replica on the basis of the impulse response obtained by the channel estimation device 14, and outputs the calculated replica to the aforesaid subtracter 12.

When the channel is estimated (i.e. the impulse response of the propagation path is estimated), generally a training signal that is already known by a reception side apparatus is inserted into the front or the center of a transmission signal by a transmission side apparatus, and the reception side apparatus performs initial estimation with a channel estimation device. Consequently, from the point of view of transmission efficiency, the initial estimation is required to have a high speed convergence characteristic.

As a channel estimation algorithm having a superior convergence characteristic, an RLS algorithm is known. By the adoption of the channel estimation device to which the RLS algorithm is applied as the aforesaid channel estimation device, a superior convergence characteristic can be obtained. Accordingly, there are many cases where the channel estimation device to which the RLS algorithm is applied is used as the channel estimation device in the transversal type filter.

However, the conventional transversal type filter has the following problem. Though the aforesaid RLS algorithm can obtain a superior convergence characteristic, because the amount of operations increases in proportion to the square of the number of taps, the amount of operations increases if the number of taps becomes large. Consequently, if the channel estimation device to which the RLS algorithm is applied is used as the channel estimation device of the conventional transversal type filter, the amount of operations increases at the time of the estimation of a propagation path.

Disclosure of Invention

An object of the present invention is to provide an impulse response estimation device capable of obtaining an impulse response of a propagation path without increasing the amount of operations.

The inventor of the present invention turns his attention to the application of a Lattice filter, which has an excellent convergence characteristic while suppressing the increase of the amount of operations, to a channel estimation device in a transversal type filter. However, a tap coefficient estimated by means of the Lattice filter takes a backward reflection coefficient estimation error as an input signal, and differs from a tap coefficient (an impulse response of a propagation path) required by the transversal type filter. That is, it is impossible to apply the Lattice filter to the channel estimation device in the transversal type filter as it is.

Accordingly, the inventor of the present invention made the tap coefficient estimated by means of the Lattice filter convert to the tap coefficient required by the transversal type filter.

That is, according to the present invention, a transformation matrix is made by the use of a backward reflection coefficient generated by the Lattice filter, and the tap coefficient capable of being applied to the transversal type filter by means of the matrix operation between the tap coefficients calculated by the use of the backward prediction error generated by the Lattice filter and the aforesaid transformation matrix. Thereby the aforesaid object of the present invention is attained.

Brief Description of Drawings

FIG. 1 is a block diagram showing the configuration of a conventional maximum likelihood sequence estimation type equalizer;

FIG. 2 is a block diagram showing the configuration of a maximum likelihood sequence estimation type equalizer equipped with an impulse response estimation device according to Embodiment 1 of the present invention;

FIG. 3 is a block diagram showing the configuration of the impulse response estimation device according to Embodiment 1 of the present invention;

FIG. 4 is a block diagram showing the configurations of the Lattice filter and the tap coefficient calculation section in the impulse response estimation device according to Embodiment 1 of the present invention;

FIG. 5 is a block diagram showing the configuration of a decision feedback equalizer equipped with an impulse response estimation device according to Embodiment 2 of the present invention;

FIG. 6 is a block diagram showing the configuration of a synchronous establishment device equipped with an impulse response estimation device according to Embodiment 3 of the present invention; and

FIG. 7 is a typical diagram showing a state when a base station apparatus equipped with an impulse response estimation device according to Embodiment 4 of the present invention performs the radio communication in the TDD system with a mobile station apparatus.

Best Mode for Carrying Out the Invention

Hereinafter, the best mode for the implementation of the present invention is described in detail with reference to the attached drawings.

(Embodiment 1)

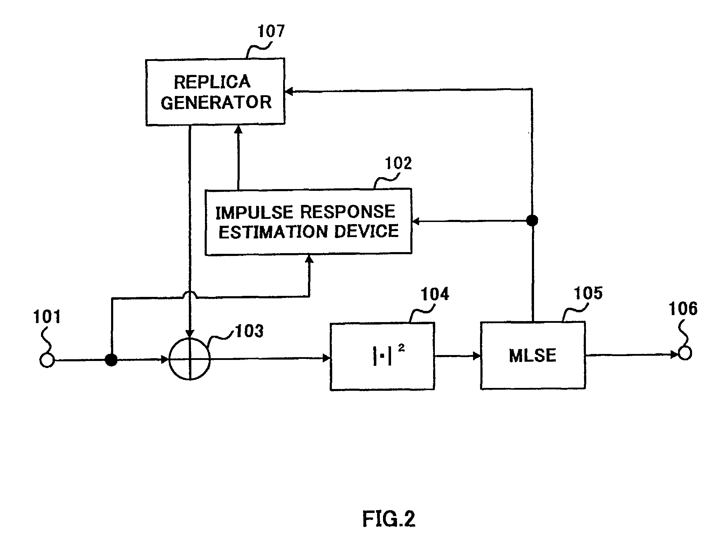

FIG. 2 is a block diagram showing the configuration of a maximum likelihood sequence estimation type equalizer equipped with an impulse response estimation device according to Embodiment 1 of the present invention. In FIG. 2, a received signal inputted from the input terminal 101 is transmitted to an impulse response estimation device 102 and a subtracter 103 according to the present embodiment.

The subtracter 103 calculates an error between a replica (the estimation value of the received signal) transmitted from the replica generator 107 and the received signal from the input terminal 101 to output an error signal. A square circuit 104 obtains the electric power of the error signal outputted by the subtracter 103.

A maximum likelihood sequence estimation device (MLSE) 105 estimates a transmission sequence having the highest likelihood on the basis of the electric power obtained by the square circuit 104, and outputs the estimated transmission sequence to an output terminal 106 as a demodulated signal. Furthermore, the maximum likelihood sequence estimation device 105 outputs the estimated transmission sequence to the impulse response estimation device 102 and the replica generator 107.

The impulse response estimation device 102 receives the input of the received signal from the input terminal 101 as a reference signal, and receives the input of the transmission sequence from the maximum likelihood sequence estimation device 105 as an input signal, and further the impulse response estimation device 102 obtains an impulse response of a propagation path on the basis of each of the input signals. Incidentally, the details of the impulse response estimation device 102 will be described later.

The replica generator 107 calculates a replica on the basis of the impulse response of the propagation path obtained by the impulse response estimation device 102, and outputs the calculated replica to the aforesaid subtracter 103. Because the replica generator 107 thereby can calculate a highly precise replica, the maximum likelihood sequence estimation device 105 can outputs a demodulated signal the influences of intersymbol interference in the received signal on which has been compensated.

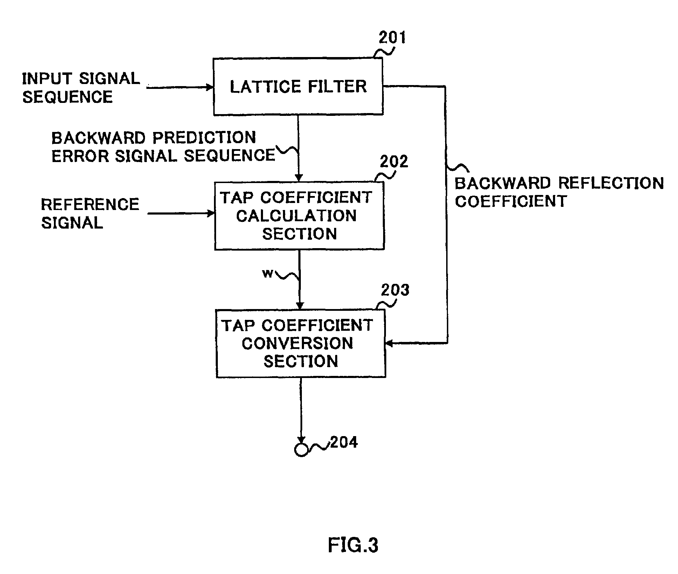

Next, the configuration of the impulse response estimation device 102 according to the present embodiment is described by reference to FIG. 3. FIG. 3 is a block diagram showing the configuration of the impulse response estimation device 102 according to Embodiment 1 of the present invention.

In FIG. 3, an input signal sequence, i.e. the transmission sequence from the maximum likelihood sequence estimation device 105 in FIG. 2, is inputted into a Lattice filter 201. The Lattice filter 201 generates a backward prediction error signal sequence and a backward reflection coefficient by the use of the input signal sequence. Furthermore, the Lattice filter 201 outputs the generated backward prediction error signal sequence to a tap coefficient calculation section 202, and outputs the generated backward reflection coefficient to a tap coefficient conversion section 203. Incidentally, the details of the Lattice filter 201 will be described later.

The reference signal, i.e. the received signal from the input terminal 101 in FIG. 2, is inputted into the tap coefficient calculation section 202. The tap coefficient calculation section 202 calculates a tap coefficient "w", the input to which is the backward prediction error, by the use of the backward prediction error signal sequence from the Lattice filter 201 and the reference signal sequence form the input terminal 101, and the tap coefficient calculation section 202 outputs the calculated tap coefficient to a tap coefficient conversion section 203. Incidentally, the details of the tap coefficient calculation section 202 will be described later.

The tap coefficient conversion section 203, at first, makes a tap transformation matrix shown in the following by the use of the backward reflection coefficient calculated by the Lattice filter 201.

$$
\mathbf{L} = \begin{bmatrix}
1 & 0 & 0 & 0 & \cdots & 0 \\
a_1(1) & 1 & 0 & 0 & & 0 \\
a_2(2) & a_2(1) & 1 & 0 & & 0 \\
a_3(3) & a_3(2) & a_3(1) & 1 & & 0 \\
\vdots & & & & \ddots & \vdots \\
a_M(M) & a_M(M-1) & a_M(M-2) & a_M(M-3) & \cdots & 1
\end{bmatrix} \quad -\text{①}
$$

where $a_M(m) = a_{M-1}(m) + \gamma_m a_M{}^*(M - m)$, and "$\gamma_m$" is a reflection coefficient at the $m^{th}$ step of the Lattice filter, and further "*" indicates to be complex conjugate.

Furthermore, the tap coefficient conversion section 203 generates an impulse response of the propagation path by means of the matrix operation using the made tap transformation matrix and a tap coefficient calculated by the tap coefficient calculation section 202, and the tap coefficient conversion section 203 outputs the generated impulse response from an output terminal 204. To put it concretely, the tap coefficient conversion section 203 generates the impulse response of the propagation path in conformity with the following expression.

$$
h = L^H w \qquad ②
$$

where "h" indicates an impulse response of a propagation path and "$L^H$" indicates a complex inverted matrix of the tap transformation matrix L and further "w" indicates a tap coefficient.

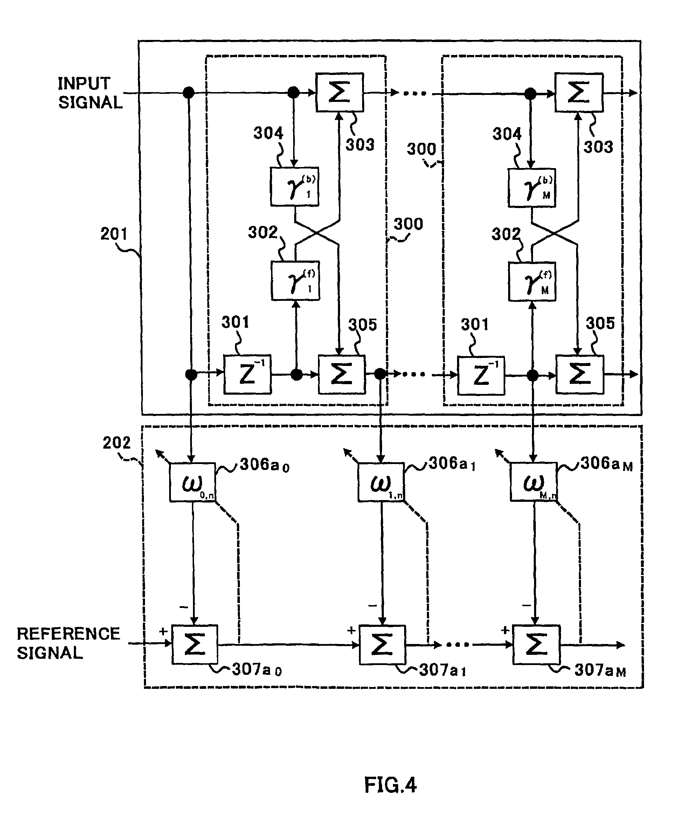

Next, the Lattice filter 201 and the tap coefficient calculation section 202 are described by reference to FIG. 4. FIG. 4 is a block diagram showing the configuration of the Lattice filter and the tap coefficient calculation section in the impulse response estimation device according to Embodiment 1 of the present invention. Incidentally, in the present embodiment, a case where the number of taps is set to be M + 1 is described as an example, but the present invention is not limited to such a case, and the present invention can be applied to cases where the number of taps is altered according to various conditions.

At first, the Lattice filter 201 is described. When Fig. 4 is referred, the Lattice filter 201 has a configuration in which M steps of filters 301 are connected in cascade connections. Each filter 301 is equipped with a delay unit 301, multipliers 302, 304, and adders 303, 305.

At first, an input signal, i.e. a transmission sequence from the maximum likelihood sequence estimation device 105, is delayed for the period of time of one symbol by the delay unit 301 in the first step filter. The input signal before the period of time of one symbol is transmitted to the adder 303 after the input signal is multiplied by the forward reflection coefficient at the first step by the multiplier 302. The signal multiplied by the forward reflection coefficient by the multiplier 302 is added to the input signal by the adder 303. The signal added by the adder 303 is an output signal at the upper row of the first step filter as a "forward prediction error", and is an input signal at the upper row of the send step filer.

On the other hand, the input signal is multiplied by the backward reflection coefficient at the first step by the multiplier 304, and then is transmitted to the adder 305. The signal multiplied by the backward reflection coefficient by the multiplier 304 is added to the input signal before the period of time of one symbol from the delay unit 301 in the adder 305. The signal added by the adder 305 is an output signal at the lower row at the first step filter as a "backward prediction error", and is an input signal at the lower row at the second step filter.

The forward reflection coefficient and the backward reflection coefficient are severally controlled in order that root mean square values of the forward prediction errors and the backward prediction errors become minimum. By the repetition of a series of the operation in the aforesaid filter up to the $M^{th}$ step, M backward prediction errors by the filters from the first step to the $M^{th}$ step and one input signal to be added, i.e. (M + 1) backward prediction errors in all, can be obtained. The obtained backward prediction errors are transmitted to the tap coefficient calculation section 202. Incidentally, the backward prediction error by the $0^{th}$ step filter corresponds to the input signal.

Next, the tap coefficient calculation section 202 is described. The backward prediction errors of the filters from the $0^{th}$ step to the $M^{th}$ step of the Lattice filter 201 are respectively transmitted to a multiplier $306a_0$ to a multiplier $306a_M$ in the tap coefficient calculation section 202. The backward prediction errors of the filters from the $0^{th}$ step to the $M^{th}$ step are severally multiplied by tap coefficients by the multipliers $306a_0$ to $306a_M$, and then the multiplied backward prediction errors are respectively subtracted from the reference signal by subtracters $307a_0$ to $307a_M$. Thereby an error signal is generated. However, the reference signals at the subtracters $307a_1$ to $307a_M$ correspond error signals generated at the subtracter at the front step severally.

The tap coefficients at the multipliers $306a_0$ to $306_M$ are adjusted in such a way that orthogonality is kept between the backward prediction errors and error signals generated by the subtracters being destinations of outputting by each multiplier. For example, the tap coefficient in the multiplier $306a_1$ is adjusted in such a way that orthogonality is kept between the backward prediction error at the first step in the Lattice filter 201 and the error signal generated by the subtracter $307a_1$ being the destination of outputting by the multiplier.

The series of the aforesaid processing by the multiplier and the subtracter is repeated as many as (M + 1) steps. By the repetition of the processing for a symbol time (for a training symbol length at the time of initial estimation), (M + 1) tap coefficients can be obtained. The aforesaid is the details of the Lattice filter 201 and the tap coefficient calculation section 202.

According to the impulse response estimation device having the aforesaid configuration, the Lattice filter 201 converts an input signal sequence to backward prediction errors orthogonalized to each other, and the tap coefficient calculation section 202 estimates tap coefficients the inputs of which are backward prediction errors from the Lattice filter 201. Thereby, the estimation of the tap coefficients can be ended by a small number of times of updating. Because the operations in the Lattice filter 201 and the tap coefficient calculation section 202 do not include matrix operations, by the use of the Lattice filter 201 and the tap coefficient calculation section 202, the tap coefficient can be estimated with a remarkably small amount of operations in comparison with the case where the RLS algorithm is used.

Furthermore, the tap coefficient conversion section 203 makes a tap transformation matrix by the use of a backward reflection coefficient made by the Lattice filter 201, and performs the multiplication of the tap transformation matrix and the tap coefficient estimated by the Lattice filter 201. Thereby, a tap coefficient applicable to the transversal type filter, namely an impulse response of a propagation path, can be obtained. Although the processing in the tap coefficient conversion section 203 includes a matrix operation, the tap coefficient conversion section 203 does not need a matrix operation at every updating like in the case where the RLS algorithm is used. That is, because the tap coefficient conversion section 203 performs the matrix operation only when a tap coefficient applicable to the transversal type filter is needed, an impulse response of a propagation path can be estimated with a small amount of operations.

To put it more concretely, in mobile communication by a time division multiple access (TDMA) system, radio communication is performed by the use of a signal in which a signal that is known on both of the transmission side and the reception side and is called as a training sequence is inserted at the front of or the center of the data sequence of the signal. In this case, when the impulse response estimation device according to the present embodiment is used, the Lattice filter 201 obtains backward prediction errors by the use of the aforesaid training sequence as an input signal sequence, and the tap coefficient calculation section 202 converges tap coefficient the inputs of which are the backward prediction errors. After the completion of the training sequence, the tap coefficient conversion section 203 converts the tap coefficient the inputs of which are the backward prediction errors to a tap coefficient applicable to the transversal type filter.

In such a case, because the impulse response estimation device according to the present embodiment performs the conversion of a tap coefficient including a matrix operation only one time, a tap coefficient applicable to the transversal type filter with a small amount of operations. Furthermore, because the Lattice filter performs a small amount of operations, the Lattice filter has convergence properties higher than those of the LMS algorithm that is frequently used. Consequently, because the impulse response estimation device according to the present embodiment can shorten the length of the training sequence, the impulse response estimation device can also improve the transmission efficiency thereof.

As mentioned above, according to the present embodiment, because a tap coefficient obtained by the use of a Lattice filter is converted to a tap coefficient applicable to a transversal type filter, an impulse response of a propagation path can be obtained without the use of the RLS algorithm. Consequently, the impulse response estimation device according to the present embodiment can obtain an impulse response of a propagation path without the increase of the amount of its operations and in a state of having a high convergence characteristic. As a result, in a transversal type filter equipped with an impulse response estimation device according to the present embodiment, because a replica generated by the use of an impulse response of a propagation path obtained by the impulse response estimation device has high accuracy, a demodulated signal is a signal the deterioration of the characteristics of which owing to the influence of intersymbol interference is satisfactorily compensated.

(Embodiment 2)

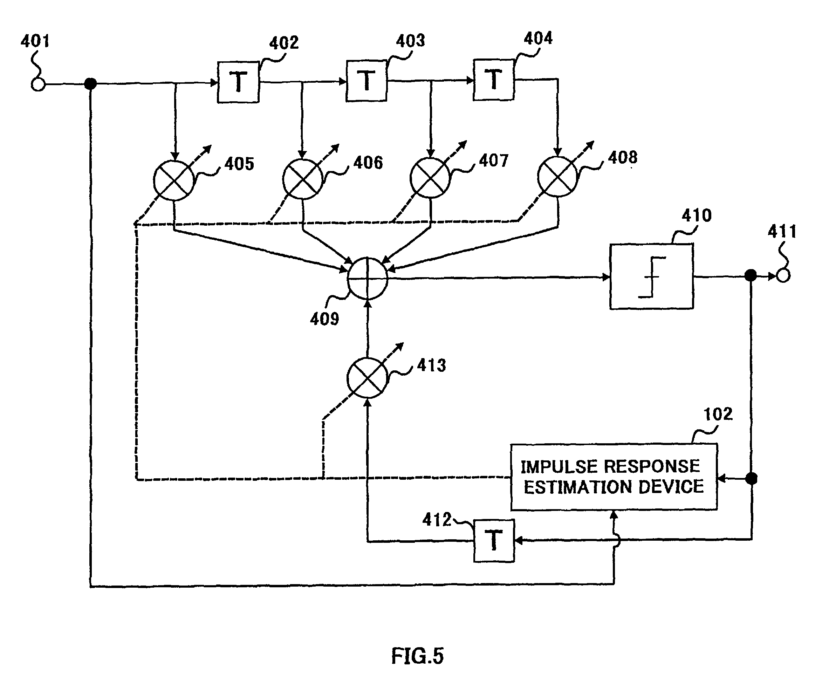

As for the present embodiment, a case where an impulse response estimation device, which was described with regard to Embodiment 1, is loaded on a decision feedback equalizer in place of a maximum likelihood sequence estimation type equalizer is described. Hereinafter, a decision feedback equalizer equipped with an impulse response estimation device according to the present embodiment by reference to FIG. 5.

FIG. 5 is a block diagram showing the configuration of a decision feedback equalizer equipped with an impulse response estimation device according to Embodiment 2 of the present invention. Incidentally, the impulse response estimation device 102 in FIG. 5 is the same impulse response estimation device described with regard to Embodiment 1.

In FIG. 5, a received signal inputted from an input terminal 401 is transmitted to a delay unit 402, a multiplier 405 and the impulse response estimation device 102. Delay units 402, 403 and 404 and multipliers 405, 406, 407 and 408 perform a convolution operation of the received signal from the input terminal 401.

That is, the delay unit 402 delays the received signal for one symbol time to transmit the delayed received signal to the delay unit 403 and the multiplier 406. The delay unit 403 delays the received signal delayed by the delay unit 402 for one symbol time to transmit the delayed received signal to the delay unit 404 and the multiplier 407. The delay unit 404 delays the received signal delayed by the delay unit 403 for one symbol time to transmit the delayed received signal to the multiplier 408.

Furthermore, the multiplier 405 multiplies the received signal from the input terminal 401 by a tap coefficient given by the impulse response estimation device 102 to transmit a signal generated by the multiplication of the aforesaid received signal and the aforesaid tap coefficient to an addition section 409. The multiplier 406 multiplies the received signal delayed by the delay unit 402 by the tap coefficient given by the impulse response estimation device 102 to transmit a signal generated by the multiplication of the aforesaid received signal and the aforesaid tap coefficient to the addition section 409. Similarly, the multiplier 407 and the multiplier 408 multiply the received signals delayed by the delay unit 403 and the delay unit 404, respectively, by the tap coefficient given by the impulse response estimation device 102 to transmit a signal generated by the multiplication of the aforesaid received signal and the aforesaid tap coefficient to the addition section 409.

The addition section 409 adds the multiplied signals from the multipliers 405-408 and a signal from a multiplier 413 that will be described later to transmit a signal after the addition to a discriminator 410 as a demodulated signal. The discriminator 410 discriminates a code of the demodulated signal from the addition section 409 to output the demodulated signal after the discrimination from an output terminal 411 as a decoded signal, and further the discriminator 410 transmits the aforesaid decoded signal to the impulse response estimation device 102 and a delay unit 412.

The impulse response estimation device 102 receives the input of the decoded signal from the discriminator 410 as a reference signal and receives the input of the received signal from the input terminal 401 as an input signal. The impulse response estimation device 102 obtains an impulse response, i.e. a tap coefficient, of a propagation path by means of the aforesaid reference signal and the aforesaid input signal to transmit the obtained tap coefficient to the multipliers 405-408 and the multiplier 413.

The delay unit 412 delays the decoded signal from the discriminator 410 for one symbol time to transmit the delayed decoded signal to the multiplier 413. The multiplier 413 multiplies the delayed decoded signal from the delay unit 412 by the tap coefficient given by the impulse response estimation device 102 to transmit a signal generated by the multiplication of the aforesaid decoded signal and the aforesaid tap coefficient to the addition section 409.

As described above, according to the present embodiment, by the use of an impulse response estimation device capable of obtaining an impulse response of a propagation path without increasing the amount of operations, the decision feedback equalizer can take out a decoded signal by means of a small amount of operations, whereas the decision feedback equalizer has a high speed convergence characteristic.

(Embodiment 3)

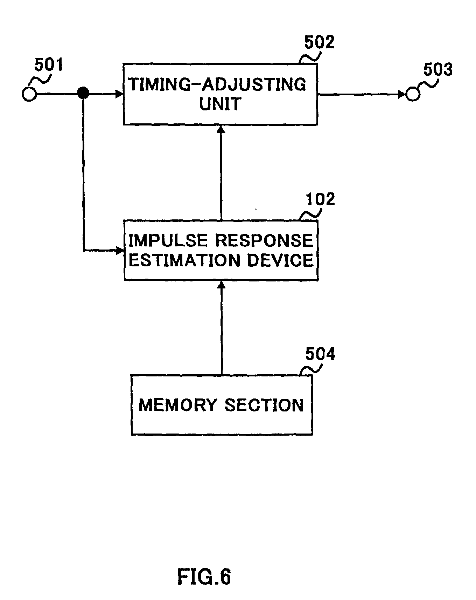

In the present embodiment, a case where the establishment of synchronization is performed by the use of the impulse response estimation device described in regard to Embodiment 1 is described by reference to FIG. 6. FIG.

6 is a block diagram showing the configuration of a synchronous establishment device equipped with an impulse response estimation device according to Embodiment 3 of the present invention.

In FIG. 6, a received signal inputted from an input terminal 501 is transmitted to a timing-adjusting unit 502 and an impulse response estimation device 102. A memory section 504 stores a known reference signal for synchronization in advance, and the memory section 504 transmits the reference signal for synchronization to the impulse response estimation device 102.

The impulse response estimation device 102 estimates an impulse response of a propagation path by the use of the received signal from the input terminal 501 as a reference signal and by the use of the reference signal for synchronization from the memory section 504 as an input signal. The impulse response estimation device 102 transmits the result of the estimation of the impulse response to the timing-adjusting unit 502. The timing-adjusting unit 502 performs the timing adjustment of the received signal from the input terminal 501 on the basis of an estimation result from the impulse response estimation device 102 to output the received signal the timing of which was adjusted.

In such a way, according to the present embodiment, by the use of an impulse response estimation device capable of obtaining an impulse response of a propagation path without increasing the amount of operations, the establishment of synchronization in a higher speed can be performed.

(Embodiment 4)

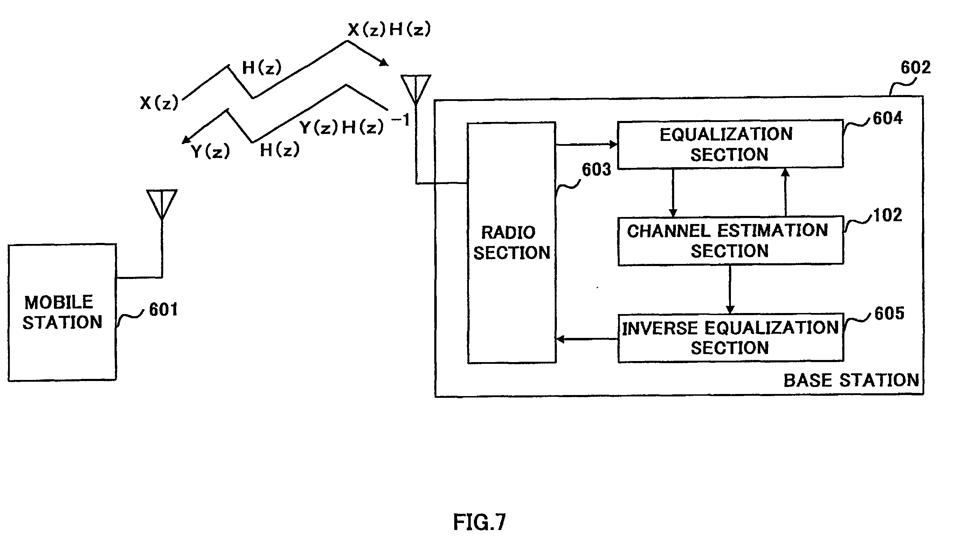

In the present embodiment, a case where radio communication is performed by the use of the impulse response estimation device described in regard to Embodiment 1 by reference to FIG. 7. FIG. 7 is a typical diagram showing a state when a base station apparatus equipped with an impulse response estimation device according to Embodiment 4 of the present invention performs the radio communication in the time division duplex (TDD) system with a mobile station apparatus. Incidentally, in FIG. 7, a channel estimation section 102 is the same as the impulse response estimation device described with regard to Embodiment 1.

In the TDD system, because the frequency bands to be used for transmission and reception are the same, a radio propagation environment at transmission timing and a radio propagation environment at reception timing can be regarded as being almost not different from each other. Now the radio propagation environments is designated by a reference character "H(z)".

When FIG. 7 is referred, a signal X(z) transmitted by a mobile station apparatus 601 is received by a radio section 603 in a base station apparatus 602 in a form of X(z)H(z). In the base station apparatus 602, the received signal is transmitted to the channel estimation section 102 through an equalization section 604.

The channel estimation section 102 estimates the propagation path H(z) by means of the received signal from the equalization section 604 to transmit the result of the estimation to the equalization section 604. The equalization section 604 decodes the received signal by means of the result of the estimation from the channel estimation section 102.

On the other hand, a inverse equalization section 605 multiplies a transmission signal Y(z) by the inverse characteristic H(z)$^{-1}$ of the propagation path H(z) estimated by the channel estimation section 102 to transmit a transmission signal multiplied by the inverse characteristic to the radio section 603. The radio section 603 transmits the transmission signal multiplied by the inverse characteristic.

The signal transmitted by the radio section 603 is received by the mobile station apparatus 601 in the following expression.

$$Y(z) \cdot H(z) \cdot H(z)^{-1} = Y(z) \qquad ③$$

As it is apparent from the above expression ?, the mobile station apparatus 601 can obtain the desired signal Y(z) without compensating the waveform distortion of the propagation path with an equalizer or the like. Thereby the load of the mobile station apparatus 601 can be decreased.

In the TDD system, because the time difference between the transmission timing and the reception timing is little, the changes of the radio propagation environments in the transmission timing and in the reception timing are small, but the estimation of a propagation path is needed to be completed in a short time. When an impulse response estimation device according to the present embodiment is used, the necessary amount of operations can be small. Consequently, it becomes possible to end the estimation of a propagation path for a short time. Moreover, because the convergence properties are high, the high accuracy estimation of a propagation path can also be performed.

As described above, according to the present embodiment, by the use of an impulse response estimation device capable of obtaining an impulse response of a propagation path without increasing the amount of operations, it becomes possible to provide a base station apparatus and a communication terminal apparatus (mobile station apparatus) that can realize good and high quality radio communication.

Incidentally, because it is preferable that the load of a mobile station apparatus is decreased as much as possible, a case where an impulse response estimation device is loaded on a base station apparatus is described in the present embodiment. However the present invention is not limited to such a case, but the present invention can be applied to a case where an impulse response estimation device is loaded on a mobile station apparatus, too.

Furthermore, the impulse response estimation device described in the aforesaid embodiments, and various equalizers and synchronous establishment devices equipped with the impulse response estimation device can be loaded on a base station apparatus and a communication terminal apparatus in a digital mobile communication system.

① An impulse response estimation device of the present invention comprises: a Lattice filter for generating a backward prediction error sequence and a backward reflection coefficient from an input signal sequence; calculation means for calculating a tap coefficient by means of a reference signal and the backward prediction error sequence; and generation means for generating a transformation matrix by means of the backward reflection coefficient to generate a tap coefficient applicable to a transversal type filter by means of a matrix operation using the transformation matrix and the tap coefficient.

According to the configuration, because the tap coefficient obtained by the use of the Lattice filter is converted to the tap coefficient applicable to the transversal type filter, an impulse response of a propagation path can be obtained without using the RLS algorithm. Thereby the impulse response estimation device can obtain the impulse response of the propagation path without increasing the amount of its operations, whereas the impulse response estimation device has a high convergence characteristic.

② A maximum likelihood sequence type estimation device of the present invention is equipped with the aforesaid impulse response estimation device.

According to the configuration, by the use of the impulse response estimation device capable of obtaining an impulse response of a propagation path without increasing the amount of its operations, the maximum likelihood sequence type estimation device can take out a decoded signal by a small amount of operations whereas the maximum likelihood sequence type estimation device has a high speed convergence characteristic.

③ A decision feedback equalizer of the present invention is equipped with the aforesaid impulse response estimation device.

According to the configuration, by the use of the impulse response estimation device capable of obtaining an impulse response of a propagation path without increasing the amount of its operations, the decision feedback equalizer can take out a decoded signal by a small amount of operations whereas the decision feedback equalizer has a high speed convergence characteristic.

④ A synchronous establishment device of the present invention is equipped with the aforesaid impulse response estimation device.

According to the configuration, by the use of the impulse response estimation device capable of obtaining an impulse response of a propagation path without increasing the amount of its operations, the higher speed establishment of synchronization can be performed.

⑤ A communication apparatus of the present invention uses a result of an estimation of a propagation path by the aforesaid impulse response estimation device to equalization processing at reception or inverse equalization processing at transmission.

According to the configuration, by the use of the impulse response estimation device capable of obtaining an impulse response of a propagation path without increasing the amount of its operations to the equalization processing at reception or the inverse equalization processing at transmission, good and high quality radio communication can be realized.

⑥ A communication terminal apparatus of the present invention is equipped with the aforesaid impulse response estimation device.

According to the configuration, by the loading of the impulse response estimation device capable of obtaining an impulse response of a propagation path without increasing the amount of its operations, the communication terminal apparatus can take out a decoded signal by a small amount of operations whereas the communication terminal apparatus has a high speed convergence characteristic. Thereby a communication terminal apparatus that performs good radio communication can be provided.

⑦ A base station apparatus of the present invention is equipped with the aforesaid impulse response estimation device.

According to the configuration, by the loading of the impulse response estimation device capable of obtaining an impulse response of a propagation path without increasing the amount of its operations, the base station apparatus can take out a decoded signal by a small amount of operations whereas the base station apparatus has a high speed convergence characteristic. Thereby a base station apparatus that performs good radio communication can be provided.

⑧ A communication terminal apparatus of the present invention is equipped with any one of the aforesaid communication apparatuses.

According to the configuration, by the equipment of any one of the aforesaid communication apparatuses, a communication terminal apparatus that performs good communication can be provided.

⑨ A base station apparatus of the present invention is equipped with any one of the aforesaid communication apparatuses.

According to the configuration, by the equipment of any one of the aforesaid communication apparatuses, a base station apparatus that can perform good radio communication can be provided.

⑩ A channel estimation method of the present invention comprises the steps of: generating a backward prediction error sequence and a backward reflection coefficient from an input signal sequence; calculating a tap coefficient by means of a reference signal and the backward prediction error sequence; and generating a transformation matrix by means of the backward reflection coefficient to generate a tap coefficient applicable to a transversal type filter by multiplying the transformation matrix and the tap coefficient.

According to the configuration, because the tap coefficient obtained by the use of the Lattice filter is converted to the tap coefficient applicable to the transversal type filter, an impulse response of a propagation path can be obtained without using the RLS algorithm. Thereby the channel estimation method makes it possible to obtain the impulse response of the propagation path without increasing the amount of its operations, whereas the channel estimation method has a high convergence characteristic.

As described above, according to the present invention, a transformation matrix is made by the use of a backward reflection coefficient generated by a Lattice filter, and a tap coefficient applicable to a transversal type filter by means of a matrix operation between a tap coefficient calculated by the use of a backward prediction error generated by the Lattice filter and the aforesaid transformation matrix. Consequently, an impulse response estimation device capable of obtaining an impulse response of a propagation path without increasing the amount of its operations can be provided.

This application is based on the Japanese Patent Application No. HEI 11-363756 filed on December 22, 1999, entire content of which is expressly incorporated by reference herein.

Industrial Applicability

The present invention is suitable for the use of the field of an equalizer for compensating waveform distortion that is generated in a propagation path owing to a delay, and more particularly is suitable for the use of the field of an impulse response estimation device installed on an equalizer for obtaining an impulse response of a propagation path.

**Claims**

1. An impulse response estimation device comprising:

   a Lattice filter for generating a backward prediction error sequence and a backward reflection coefficient from an input signal sequence;
   calculation means for calculating a tap coefficient by means of a reference signal and the backward prediction error sequence; and
   generation means for generation a tap coefficient applicable to a transversal type filter by means of a matrix operation using the transformation matrix ,which is generated by means of the backward reflection coefficient, and the tap coefficient..

2. A maximum likelihood sequence estimation type equalizer equipped with said impulse response estimation device according to claim 1.

3. A decision feedback equalizer equipped with said impulse response estimation device according to claim 1.

4. A synchronous establishment device equipped with said impulse response estimation device according to claim 1.

5. A communication apparatus using a result of an estimation of a propagation path by said impulse response estimation device according to claim 1 to equalization processing at reception or inverse equalization processing at transmission.

6. A communication terminal apparatus equipped with said impulse response estimation device according to claim 1.

7. A base station apparatus equipped with said impulse response estimation device according to claim 1.

**8.** A channel estimation method comprising the steps of:

generating a backward prediction error sequence and a backward reflection coefficient from an input signal sequence;
calculating a tap coefficient by means of a reference signal and the backward prediction error sequence; and generating a tap coefficient applicable to a transversal type filter by multiplying the transformation matrix, which is generated by means of the backward reflection coefficient, and the tap coefficient.

EP 1 162 760 A1

FIG.1

FIG.2

FIG.3

FIG.4

FIG.5

501

502

503

TIMING-ADJUSTING
UNIT

102

IMPULSE RESPONSE
ESTIMATION DEVICE

504

MEMORY SECTION

FIG.6

FIG.7

EP 1 162 760 A1

## INTERNATIONAL SEARCH REPORT

| International application No. |
|---|
| PCT/JP00/08801 |

**A. CLASSIFICATION OF SUBJECT MATTER**
Int.Cl⁷   H04B7/005

According to International Patent Classification (IPC) or to both national classification and IPC

**B. FIELDS SEARCHED**

Minimum documentation searched (classification system followed by classification symbols)
Int.Cl⁷   H04B 7/005- 7/015
H03H21/00, 17/00 -17/02

Documentation searched other than minimum documentation to the extent that such documents are included in the fields searched
Jitsuyo Shinan Koho          1922-1996     Toroku Jitsuyo Shinan Koho  1994-2001
Kokai Jitsuyo Shinan Koho   1971-2001     Jitsuyo Shinan Toroku Koho  1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP, 6-276055, A (Mitsubishi Electric Corporation),<br>30 September, 1994 (30.09.94)   (Family: none) | 1,8<br>2-7 |
| Y | JP, 11-508113, A (Philips Electronics NV),<br>13 July, 1999 (13.07.99)<br>& DE, 19614543, C    & WO, 97039536, A1<br>& EP, 848870, A      & US, 6002716, A1 | 2 |
| Y | JP, 5-506762, A (Motorola Inc.),<br>30 September, 1993 (30.09.93)<br>& US, 5142551, A     & WO, 9216054, A1<br>& FR, 2673781, A1    & AU, 9215337, A<br>& DE, 4290581, T     & GB, 2262416, A<br>& BR, 9204765, A     & AU, 637545, B<br>& CN, 1065765, A     & IT, 1258357, B<br>& CA, 2075051, C     & KR, 9603835, B1<br>& JP, 2998992, B2 | 2-7 |
| Y | JP, 6-334692, A (Sony Corporation),<br>02 December, 1994 (02.12.94)   (Family: none) | 2,4 |

☒ Further documents are listed in the continuation of Box C.          ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>27 February, 2001 (27.02.01) | Date of mailing of the international search report<br>13 March, 2001 (13.03.01) |
|---|---|
| Name and mailing address of the ISA/<br>Japanese Patent Office | Authorized officer |
| Facsimile No. | Telephone No. |

Form PCT/ISA/210 (second sheet) (July 1992)

**INTERNATIONAL SEARCH REPORT**

International application No.

PCT/JP00/08801

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 11-145778, A (Matsushita Electric Ind. Co., Ltd.), 28 May, 1999 (28.05.99)   (Family: none) | 5-7 |
| A | JP, 7-110693, A (Sharp Corporation), 25 April, 1995 (25.04.95) & GB, 9420865, A0   & GB, 2282933, A & US, 5774564, A | 1,8 |
| A | JP, 60-97713, A (Canon Inc.), 31 May, 1985 (31.05.85)   (Family: none) | 1,8 |

Form PCT/ISA/210 (continuation of second sheet) (July 1992)